Europäisches Patentamt

European Patent Office

Office européen des brevets

(11) Publication number: **0 139 200**
A2

# EUROPEAN PATENT APPLICATION

(21) Application number: **84110695.8**

(22) Date of filing: **07.09.84**

(51) Int. Cl.⁴: **B 01 D 46/00**
**B 01 D 46/42, B 01 D 29/02**

(30) Priority: **10.09.83 GB 8324295**

(43) Date of publication of application:
**02.05.85 Bulletin 85/18**

(84) Designated Contracting States:
**AT BE CH DE FR GB IT LI LU NL SE**

(71) Applicant: **PAUL DE LA PENA LIMITED**
**Racecourse Road**
**Pershore Worcestershire WR10 2DD(GB)**

(72) Inventor: **Sweeney, George**
**8 Hall Hill Bollington**
**Macclesfield Cheshire SK10 5ED(GB)**

(74) Representative: **Leach, John Nigel et al,**
**FORRESTER & BOEHMERT Widenmayerstrasse 4/I**
**D-8000 München 22(DE)**

(54) Improvement relating to a method of and apparatus for filtering.

(57) A method of filtering utilises a filtering apparatus (10;110,200) having a filter member presenting a plurality of flow paths therethrough of a form to retain at least a portion of the material to be extracted the method comprising the steps of passing a stream of fluid to be filtered in a forward direction from an inlet (12) through the filter member, stopping the flow of fluid in the forward direction, or moving the filter member out of the fluid flow, changing the geometry of the filter member under gravity, e.g. by inverting the filter member to assist in removal of extracted material from the filter member.

./...

FIG.1

0139200

Title: "Improvements relating to a method of and apparatus for filtering"

This invention relates to a method of and apparatus for filtering material from a fluid stream containing such material.

The material filtered from the fluid stream which may be a gaseous fluid or a liquid fluid usually comprises solid state particles. The material extracted, however, may include material of quasi solid form such as gel particles or globule particles of a fluid, more viscous than that which forms the main stream of fluid to be filtered and which may either be intrinsically able to coalesce into such globule particles or adhere to solid state particles. The term "extracted material" as used herein includes both solid state and quasi solid material. The maximum cross-sectional size of passageways afforded by a primary filter member incorporated in the filtering apparatus is determined by the average size of the particles which it is desired to filter from the fluid stream.

One of the problems encountered in methods of and apparatus for filtering is that the passageways afforded by the filter member become blocked or clogged by extracted material. This is especially the case if the fluid to be filtered contains particles having a wide spectrum of sizes because the passageways in the filter member may quickly become blocked initially by larger sized particles. If this clogging occurs, the filter member may thus filter from the fluid stream, particles of smaller size than the passageways in the filter member.

Eventually the clogging results in the severe reduction of the rate of flow of the fluid to be filtered through the primary filter member, and possibly preventing such flow altogether.

Further, filtering apparatus are known which have a secondary filter, finer than the primary filter, to filter fine particles which pass through the primary filter member, from the fluid stream. Such secondary filters also become clogged, in use.

Thus it is often the case that filter members require to be subjected to action to remove extracted material therefrom.

The object of the present invention is to provide a method and a form of filter member which facilitates this operation.

0139200

According to one aspect of the invention, we provide a method of filtering utilising a filtering apparatus having at least one filter member presenting a plurality of flow paths therethrough of a form to retain, in use, at least a portion of material to be extracted (herein called the extracted material) from a stream of fluid to be filtered, characterised in that said method comprises the steps of passing a stream of fluid to be filtered in a forward direction through the filter member with the filter member in a filtering position, stopping the flow of fluid relative to the filter member, changing the orientation of the filter member under gravity, to remove extracted material from the filter member.

Because the change in orientation of the filter member is achieved under gravity, there is no necessity to provide any method step or means, for acting on the filter member to cause said change in orientation although as described below the filter member may be flushed if required.

Preferably, the filter member is moved out of the path of fluid flow to a position where the orientation thereof is changed. Alternatively, the fluid flow in the forward direction may be stopped with the filter member in its filtering position before the orientation of the filter member is changed under gravity. In each case, extracted material collected by the primary filter member is removed from the filter member, when the geometry of the filter member is changed.

From a second aspect, the invention resides in the provision of a filtering apparatus comprising at least one filter member presenting a plurality of flow paths therethrough, means to change the orientation of the filter member under gravity from a filtering position in which the filter member is in a stream of fluid to be filtered, and presents constriction to said fluid in a forward direction so that material is extracted from the fluid by the filter member, to another position wherein extracted material is removed from the filter member.

The filtering apparatus may have a plurality of filter members provided, each comprising a section of a continuous belt conveyor, and each presenting said flow paths to the fluid flow, the belt being movable to move each filter member in turn from its filtering position in which the fluid is constrained to pass in the forward direction through the flow paths, to said another position out of the fluid flow, at which the orientation of the filter member may be changed.

The invention will now be described, by way of example, with reference to the accompanying drawing in which:-

FIGURE 1 is a side schematic sectional view of a first embodiment of a filtering apparatus in accordance with the second aspect of the invention for use in the method according to the first aspect of the invention;

FIGURE 2 is a perspective view, partly broken away, of a practical form of the embodiment shown in Figure 1;

FIGURE 3 is a schematic side sectional view of a second embodiment;

FIGURE 4 is a view of a third embodiment;

FIGURE 5 is a diagrammatic perspective view of part of the filtering apparatus of Figure 4, but modified;

FIGURE 6 is a plan view of a further modified arrangement of the Figure 4 embodiment; and

FIGURE 7 is a section on the lines V-V of Figure 6.

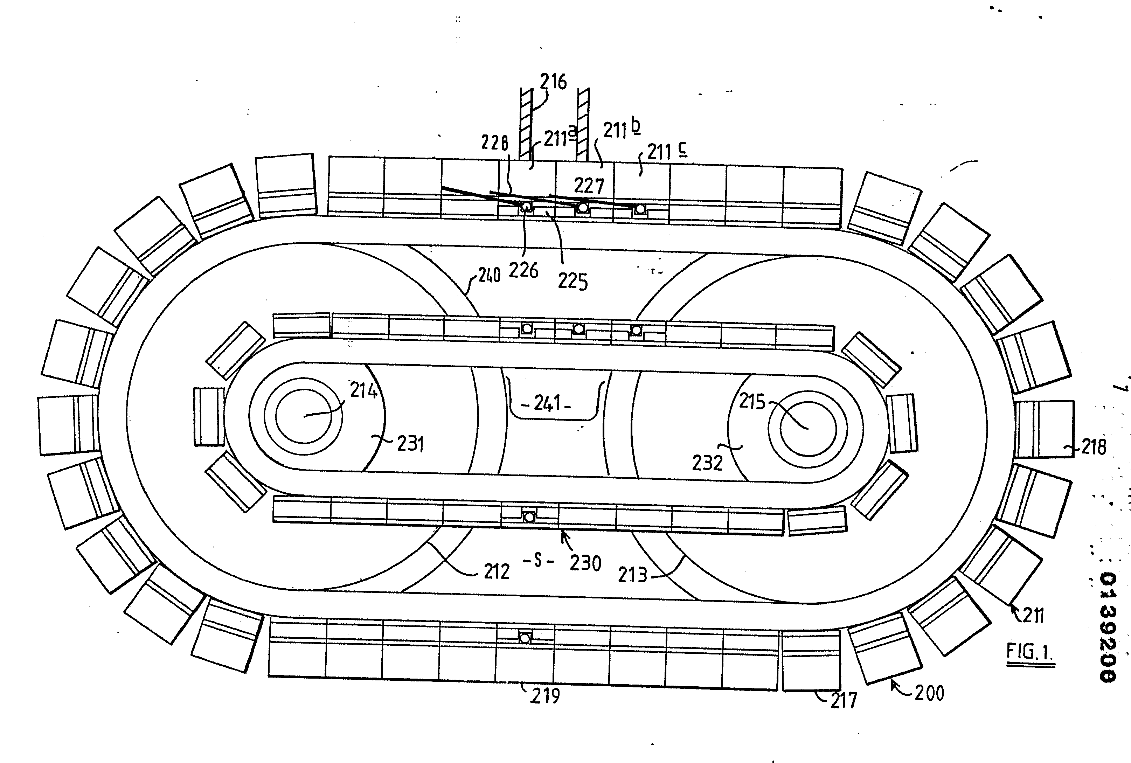

Referring first to Figure 1, a filtering apparatus 200 comprises a plurality of filter members, some of which are indicated at 211a, 211b, 211c each comprising a section of a continuous belt conveyor. The belt 211 is received around a pair of sprockets 212, 213 rotated about respective axes 214, 215 by any desired drive means.

An upper length of belt 211 which extends between the sprockets 212, 213 is located beneath a duct 216 of a coolant fluid system, so that coolant fluid contaminated with swarf and the like will pass from the duct 216 through the belt by which the swarf and other material is extracted, to enable the coolant to be re-cycled.

The filter members 211a, 211b, 211c, each have a base member 225 comprising a pair of strips, one strip either side of the belt between which extend in each filter member 211a, 211b and 211c a retaining element comprising a wire 226.

The strips which form the base member 225 are each interconnected to allow movement between the sections as hereinafter described, and each have means to engage the sprockets 212, 213 so that drive is transmitted to the belt 211.

For example, the sprockets 212, 213 could be toothed, in which case the strips or one of the strips could comprise a chain to receive the teeth of the sprockets 212, 213 or alternatively, the drive may be transmitted by friction only or in any other desired manner.

The sections 211a, 211b, 211c each have side members 227 which extend away from the base member 225 either side of the belt.

Although the base members 225 for each of the filter members are interconnected, the side members 227 are disjointed so that as the filter members engage around the sprockets 212, 213, the sections can separate and thus move relative to one another, although when the sections are beneath the duct 216, i.e. in a straight run between the sprockets 212,213, the side members 227 engage one another and form a continuous filter bed.

The retaining elements 226 each retain a filter element 228. It can be seen that along the straight run at the upper side of the belt 211 adjacent the duct 216, the filter elements 228 overlap. In the present case, the sprockets 212, 213 rotate clockwise and the filter elements 228 overlap so that each filter element 228 overlaps the next left filter element.

The filter elements 228 are not constrained at their sides remote from the retaining elements 226 and are thus free to pivot either about the wires or are attached to the wires 226 which are themselves free to pivot relative to the base members 225.

The filter elements 228 are each made of aluminium or other metal gauze, or material which may be impregnated so as not to be absorbent of the coolant to be filtered.

The filter elements 228 thus present a plurality of flow paths through the filter members 211a, 211b, 211c to remove extracted material from the fluid to be filtered as the sections of the belt 211 pass into the fluid flow beneath duct 216.

The sprockets 212, 213 may be rotated in steps as required, but preferably are continuously rotated slowly so that fresh parts of the belt 211 are continuously located beneath the duct 216 and thus presented to the stream of fluid to be filtered.

As the filter member sections of the belt 211 move away from beneath the duct 216, they carry with them extracted material, whilst the filtered fluid passes through the belt 211 for further filtering as hereinafter described. Because the filter elements 228 are free to pivot, they will begin to separate from one another from the overlapped position as the filter members 211a, 211b, 211c engage the sprocket 213, under the influence of gravity. As the filter members reach the position at which filter member 218 is shown, the filter elements 228 will be generally vertical and the extracted material on the filter elements 228 will become dislodged and thus removed

- 5 -

0139200

under gravity from the belt 212. Of course, by the time the filter members disengage the sprocket 213 to travel along the lower straight section, e.g. at the position occupied by filter member 217, the filter elements 218 will be inverted hanging vertically retained by their retaining elements 226.

If desired, means may be provided such as a reverse flow of fluid through the filter elements 228 to flush the filter elements 228 with fluid as they pass along the lower straight 219 of the belt 211.

As the filter members 211a, 211b, 211c engage sprocket 212, the filter elements 228 will again assume their overlapped position, again under gravity and when they disengage the sprocket 212, they will again present in their overlapped extracted material free condition, flow paths therethrough for the fluid to be filtered introduced through the duct 216.

Thus the filter elements 228 will be continuously cleaned allowing for continuous filtering of the fluid without any need to periodically stop filtering and remove extracted material from the filter members.

After prolonged use, it may be required to present the opposite sides of the filter elements 228 to the fluid to be filtered so that the fluid to be filtered will flush and remove any stubborn extracted material attached to the previously upward facing surface. This can be simply achieved in this embodiment by reversing the direction of rotation of the sprockets 212, 213. The filter elements 228 will assume an opposite overlapped condition, i.e. each filter element 228 will overlap the next right filter element.

It can be seen that located inwardly of the belt 211, a second conveyor belt 230 is provided which is carried by a further pair of sprockets 231, 232 which also rotate about axes 214, 215, the belt 230 also comprising a plurality of filter member sections similar to the belt 211.

Preferably, the sprockets 231 and 232 rotate in the same direction as the sprockets 212 and 213 and thus may be driven from a common drive means.

The construction of the belt 230 is substantially similar to the construction of the belt 211, although the filter elements of the filter members are smaller, but could be of the same or larger size as the elements 218 of belt 211.

Furthermore, the fluid flow paths presented by the filter elements thereof are smaller so that the second filter members provide a finer degree of filtering than the first filter members 211a, 211b, 211c.

The fluid which passes from duct 216 through the first filter members of belt 211 is guided by a guide 240 to pass through the second filter members of belt 230. The thus twice filtered fluid is then removed from a space 241 inwardly of the second belt 230 by suitable duct means (not shown) for recycling.

Alternatively, the belt conveyor could be arranged to permit the filtered fluid to pass through the lower tracks between the sprockets 231, 232 also, and to be collected and recycled from space S. This would be of advantage in that the filter elements of the belt 230 would be flushed, but of disadvantage in that the filtering efficency would be lowered. However this may be acceptable in some circumstances.

The filtering apparatus described with reference to Figure 1 can be made an integral part of a machine tool or a separate unit as required.

The axes 214, 215 may be separated by any required distance provided that the belts 211, 230 are made sufficiently long. If desired, the second belt 230 may not be provided, or more than two belts, each with filter members, may be provided.

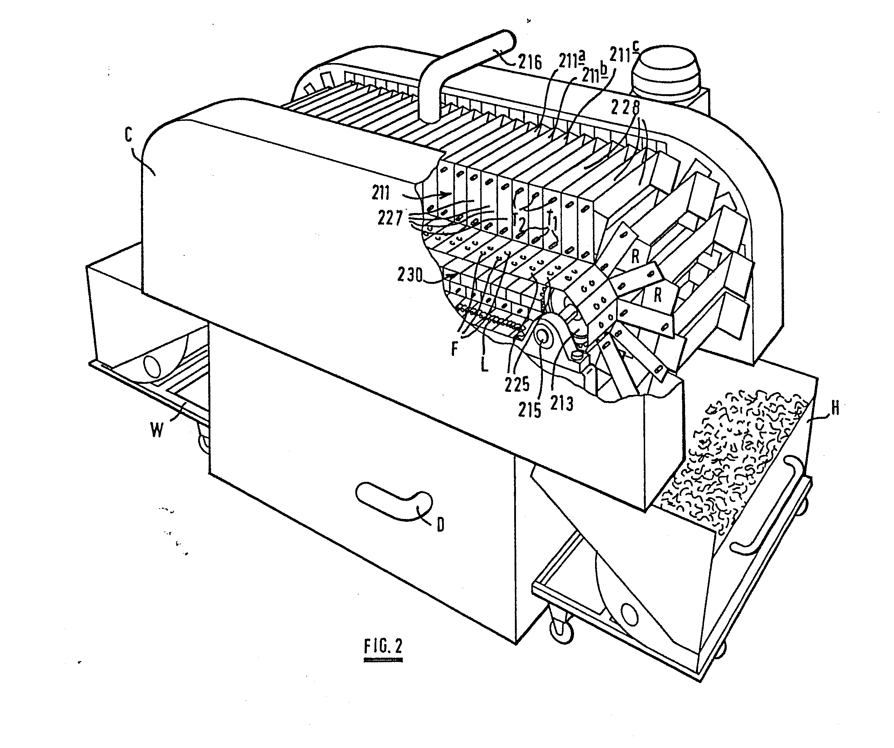

Referring now to Figure 2, a practical example of a continuous conveyor belt filter apparatus such as described in Figure 1 is illustrated. Parts corresponding to parts of Figure 1 are given the same reference numerals.

It can be seen that the apparatus comprises first 211 and second 230 belts enclosed in a casing C.

The inlet duct 216 for fluid to be filtered comprises a pipe which extends for example to a machine tool or group of machine tools from where contaminated coolant is fed.

The filter members 211a, 211b, 211c of belt 211 each have side strips 227 pivotally fixed at their lower ends by rivets $T_1$, to base members 225, and are pivotally mounted at their upper ends by studs $T_2$ to filter elements 228.

The base members 225 extend outwardly of the filter elements 211a, 211b, 211c and have locating formations F which are engaged by the teeth of the sprockets 212, 213 to impart drive to the belt 211.

The filter elements 228 are carried on a frame R for rigidity, and overlap at least when between sprockets 212, 213 (only sprocket 213 of which can be seen) to present a continuous filter surface to the fluid introduced through duct 211.

The second belt 230 is similarly constructed, but has an integral chain L which engages further sprockets 231, 232 (not shown) which rotate about axes coincident with the axes 214, 215 of rotation of sprockets 212, 213.

Swarf which is dislodged from the filter elements 211a, 211b, 211c as they pass around sprocket 213, is dislodged into a chute H which is removable from the remainder of the casing to permit of disposal of the swarf.

Filtered coolant passes from the casing by a further duct D for recirculation as required.

It can be seen that the apparatus is provided on a wheeled carriage W and thus may be moved around a machine shop for example to any required position.

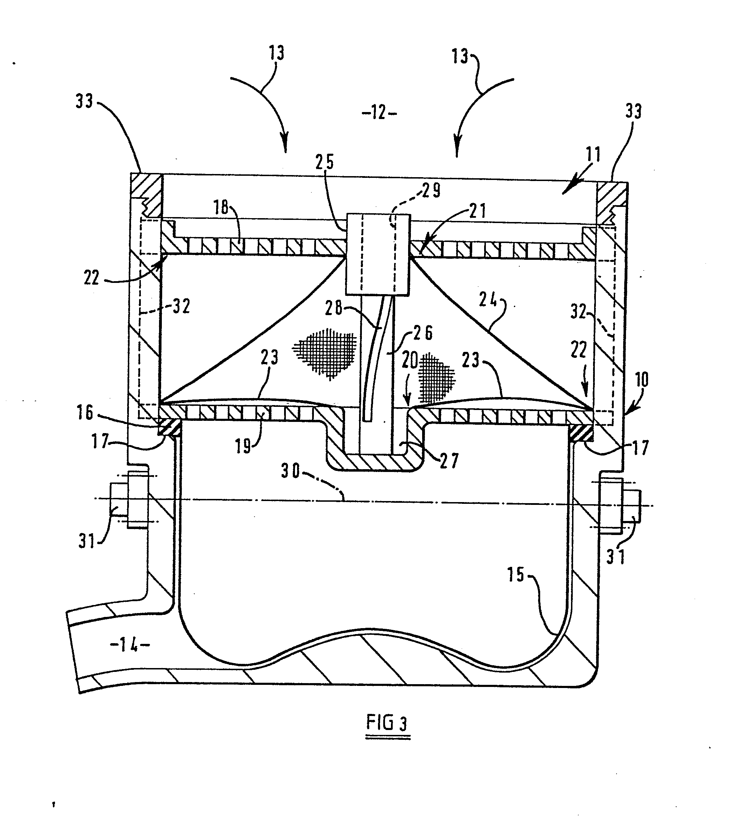

Referring now to Figure 3 of the drawings, a second embodiment of the invention is shown.

A filtering apparatus comprises a body 10 which may be of generally cylindrical form and which provides a filtering chamber 11 having an inlet 12 at its upper end for the inflow of the fluid to be filtered, as indicated by arrows 13. At its lower end the chamber 11 has an outlet 14 for the outflow of the filtered fluid.

In the lower part of the chamber 11 there may be provided a conventional secondary filter member 15 in the form of a bag or receptacle of flexible material, possibly formed by a woven structure, having a rigid rim 16 seated on an internal upwardly presented shoulder 17 at the upper end of the lower portion of the chamber 11.

The upper portion of the chamber 11 contains a primary filter member. In this embodiment the filter member comprises a pair of supporting plates, namely an upper plate 18 retained, upon inversion of the body 10, as hereinafter mentioned, by a screw threaded ring 33, or other stop, and a lower plate 19 retained in any suitable manner in the position shown, which may each be made of any suitable material, for example mild or stainless steel, the upper and lower plates 18, 19, each having relatively large sized apertures which permit the flow of the fluid to pass therethrough without any significant constriction.

For clarity, the filter member is shown in a condition it would adopt when inverted although the filtering apparatus is shown upright.

Supported between the upper and lower plates 18, 19 are a plurality of strips 24 of woven fabric material, the strips each being of generally triangular shape, one corner of the triangle being supported at an outer peripheral region 22 of plate 19, another corner being supported from an inner region 20 of plate 19, and the remaining corner from a central boss 25 at a central region 21 of plate 18.

The corners of the strips 24 are supported from the plate 19 and the boss 25, in any suitable manner, for example by clamping rings (not shown) or adhesively.

When the body 10 is in its normal filtering position these strips 24 would lie in face-to-face relation on top of each other with the plate 18 in a lowered position adjacent to plate 19. When the filter body 10 is inverted, however, plate 19 is retained in the position shown but plate 18 takes up the position shown under the action of gravity. The strips 24 are shown in the relative positions which they then occupy.

The boss 25 is secured to plate 18 and is slidable vertically on a post 26 extending upwardly from a seating 27 in the central region 20 of the lower plate 19.

When the filter member is in operation for filtering, the plate 18 and the boss 25 are lowered until all the strips 24 lie flat on the lower plate 19 so that they are in face-to-face contact with each other. In this position the apertures presented respectively by the strips collectively form passageways presenting a certain degree of constriction to flow of the fluid to be filtered. Each of the strips 24 retain particles to some extent and after a time, clogging or blockage of the passageways, results.

To remove the extracted material from the filter member, the plate 18 and boss 25 are together displaced, e.g. by inversion of the body 10, to the position illustrated.

One effect of this is that particles retained by the strips 24 are no longer constrained by the strips 24 and hence can readily be released, under the influence of gravity. Reversed flow of the fluid undergoing filtering, or reversed flow of a flushing fluid which may be admitted via the outlet 14 or another inlet (not shown) via a change-over valve or the like (not illustrated) may be used alternatively or in addition to the gravitational effect to produce or assist release.

Additionally, as the plate 18 and boss 25 move, they are rotated, conveniently by the provision of a helical groove 28 in the post 26, this groove 28 cooperating with a key or tongue projecting inwardly from a guide passageway 29 through the boss 25 thereby causing the boss 25 to rotate and carry the corners of the strips 24 secured to the boss with them, while the other corners of the strips 24 are held stationary by the plate 19.

Alternatively, or additionally the plate 18 and boss 25 may be rotated under gravity by the provision of a helical thread in a groove 32 in which the outer periphery of the plate 18 rides when the apparatus is inverted, as hereinafter described.

The strips 24 thus extend from the boss 25 to the outer region 22 as tangents to a pitch circle defined by the outer surface of the boss 25 when the plates 18, 19 are together and all make a corresponding angle of lag or lead with reference radii extending outwardly from the surface of the boss 25. As the boss 25 is rotated and the plates 18, 19 move apart under gravity and the angle of lag or lead is reduced and thus adjacent strips 24 will be moved apart from each other so as to provide wider spaces between them, and facilitate removal of the extracted material.

It will be seen that, broadly, the orientation and geometry of the filter member is thus changed, the strips 24 being moved from contacting or closely adjacent positions when filtering, to positions which are more widely spaced, as seen in the drawing, and which facilitate removal of the extracted material, by virtue of the wider spacing between the radiating strips 24 as the boss 25 and plate 18 rotate.

The body 10 may be mounted for inversion about an axis 30 and may have trunnions 31 for support in suitable bearings (not shown). Thus, as mentioned, in its normal filtering position the upper plate 18 would be retained gravitationally in its lower position adjacent to plate 19 with the strips 24 sandwiched between the two plates 18, 19.

Upon inversion of the body 10 the plate 18 would move to a position adjacent the then lower end of the body 10 and extracted material previously held on the previously upwardly presented surfaces of the strips 24 would be discharged gravitationally and eventually pass through the apertures presented by the plate 18.

Because the spaces between the strips 24 are enlarged when the body 19 is inverted, particles extracted by the filter bag 15 can thus pass back through filter member under gravity, or with the assistance of a flushing fluid where used, and hence be removed from the filtering apparatus.

The change of geometry of the filter member could also be obtained, by using filaments instead of the strips 24, which filaments could comprise a first layer which extends radially from the inner region 20 of plate 19, to the outer region 22, a second layer which extends from the boss 25 to an outer region of plate 18, and a third layer, one end of the filaments of the third layer being secured to the boss 25, and the other ends to the outer region 22 of plate 19.

Thus when the plates 18, 19 are in close face-to-face relation, the layer of filaments would extend tangentially from the boss 25 and thus cross with the first and second layers to form small passageways, and when the plates 18, 19 are reorientated to the position shown in Figure 1, the filaments of the third layer would also extend radially, due to the rotation of the boss 25, and thus larger passageways between the filaments would be provided, to reduce the constriction.

If desired, only one end of each of the filaments needs to be secured to a plate, such as plate 19, the filaments being movable by gravity, and if desired, additionally by a flushing fluid (where used) to provide smaller or larger passageways.

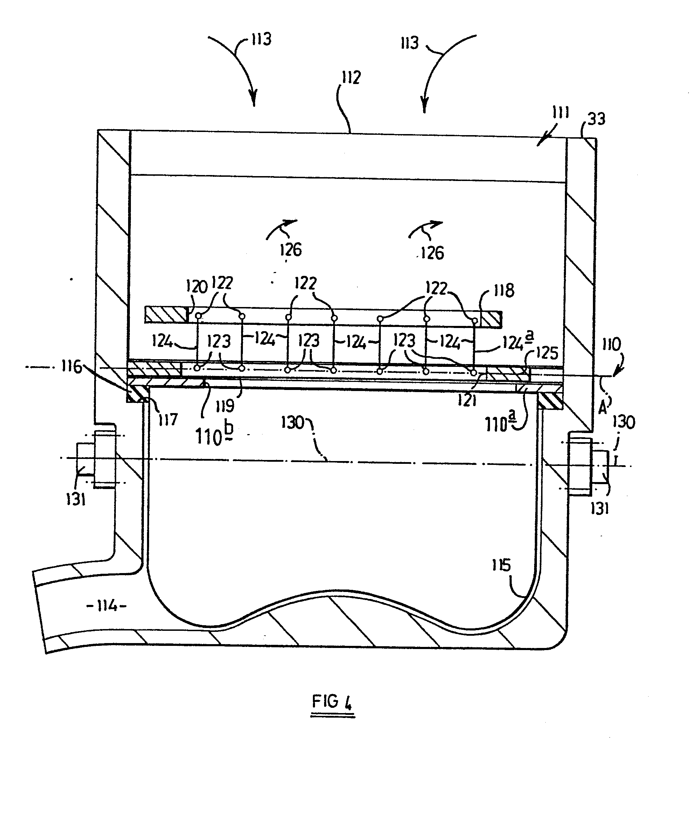

Referring now to Figure 4, a third embodiment of the invention is shown which comprises an apparatus comprising a body 110 of generally rectangular or cylindrical form and which provides a filtering chamber 111 having an inlet 112 at its upper end for the inflow of the fluid to be filtered, as indicated by arrows 113. At its lower end the chamber 111 has an outlet 114 for the outflow of the filtered fluid.

In the lower part of the chamber 111 there is provided a conventional secondary filter member comprising a filter bag 115 or other receptacle of flexible material, usually formed by a woven structure, having a rigid rim 116 seated on an internal upwardly presented shoulder 117 at the upper end of the lower portion of the chamber 111, although this may not be required, particularly where a plurality of filtering members of graduating filter fineness are provided within chamber 111, similar to the primary filter member described below.

The upper portion of the chamber 111 contains the primary filter member which, in accordance with the second aspect of the present invention, comprises a pair of mounting plates, namely an upper plate 118 and a lower plate 119. Again in Figure 4, the filitering apparatus is shown upright, but for clarity the filter member is in the position it would adopt during filtering.

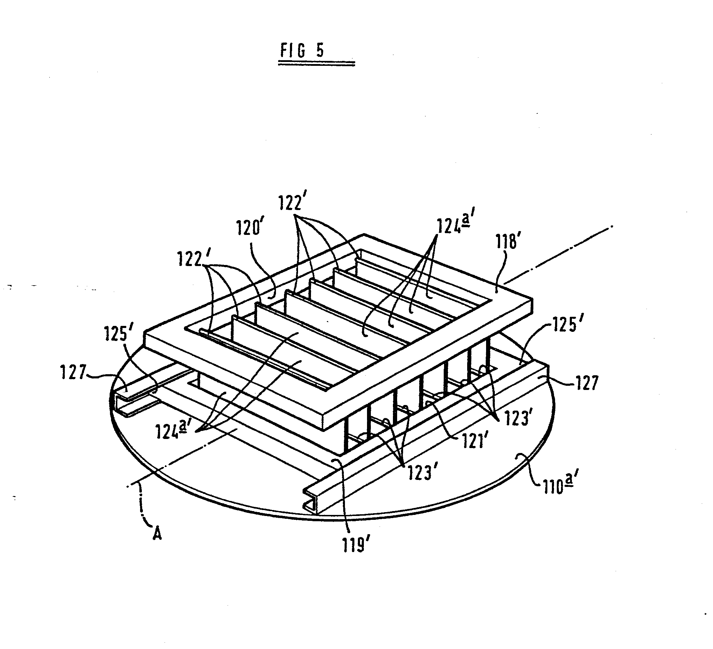

The lower plate 119 may be retained in any suitable manner in the position shown on a dividing part 110a which divides the chamber 111 into upper and lower portions, but the lower plate may alternatively be movable along an axis as hereinafter described with reference to Figure 5. Each plate 118, 119 may be made of any suitable material, for example stainless steel and each have a large rectangular aperture 120, 121 respectively therein, which apertures 120, 121 by themselves, do not present any significant constriction to the flow of fluid to be filtered. The divider part 110a also has a large aperture 110b therein to permit of communication between the upper and lower chamber portions.

Extending between the sides of apertures 120, 121 are retaining elements comprising wires 122, 123 which wires 122, 123 extend parallel to one another. Each wire 122 is secured at its ends to plate 118, and provides a retaining element for one side of a mesh filter element 124, and corresponding wires 123 are secured at their ends to plate 119 each providing a retaining element at the opposite side of the mesh filter element 124. The wires 122, 123 are secured to the mesh material of the element 124, for example by being threaded into the mesh, or by any other means to permit of the wires rotating about a longitudinal axes relative to the mesh material, or alternatively may be fixed to the mesh material, the wires 122, 123 being mounted for rotation with the mesh material element 124 about the longitudinal axes of the wires relative to the sides of the apertures 120, 121.

As shown, seven filter elements 124 are provided although more or less may be provided as required. The mesh material extends across the entire width of the apertures 120, 121 and is preferably, of constant mesh size.

During normal filtering operation, the plates 118, 119 lie in face to face contact with the filter elements 124 lying flat or substantially flat and overlapping with one another. The endmost filter element 124a will overlap with ends 125 of the aperture 121 and thus the entire flow of the fluid through the apertures 120, 121, is through flow paths presented by the mesh of the filter elements 124 and 124a.

The mesh material of the filter elements is coarser than that of the filter bag 115 (or next downstream filter member if more than one filter of the primary filter member kind are provided instead of the bag 115), but sufficiently fine to present restricted passage through the filter elements 124, 124a to, at least initially, enable the larger particles entrained in the fluid, to be filtered and subsequently, finer particles also.

Thus many of the large particles entrained in the fluid will be filtered out by the filter member and retained by the mesh material of the filter element 124, 124a predominantly by the upwardly facing surfaces thereof, whilst permitting fluid to pass substantially unrestricted, therethrough.

After a time, the filter member and/or the filter bag 115 will become full or clogged by the filtered particles, and hence blocked, so that fluid will not pass easily therethrough.

To remove the extracted material from the filter member, the plate 118 is displaced, under gravity, e.g. by inversion of the body 110, to the position illustrated.

One effect of this is that particles retained on the filter elements 124, 124a are no longer constrained by the filter elements 124, 124a but are readily released from the elements under the influence of gravity. Reversed flow of the fluid undergoing filtering, or reversed flow of another flushing fluid which may be admitted via the outlet 114 or other inlet, through for example a change-over valve (not illustrated) may be used in addition to the gravitational effect to produce or assist release.

It can be seen that plate 118 is constrained by the filter elements 124, 124a and hence cannot fall further than the distance shown, when the filter elements are vertical. The downward movement of plate 118, as the body 110 is inverted, comprises a sideways component also, and hence resultant movement is substantially as indicated by arrows 126 the path of movement being in a plane parallel to the direction of filtering. This radial movement is permitted by virtue of the wires 122, 123 being mounted for rotation either relative to the mesh material, and/or to the sides of the apertures 120, 121 as hereinbefore described. When in an inverted condition, the filter member thus presents larger apertures substantially equal to the distance between the filter elements 124, 124a.

The body 110 is again mounted for inversion about an axis, indicated at 130 and may have trunnions 131 for support in suitable bearings (not shown). Thus, as mentioned, in its normal filtering position the upper plate 118 would be retained gravitationally in its lower position adjacent to plate 119 with the filter elements 124 lying flat, and closing apertures 120, 121.

Upon inversion of the body 110 the plate 118 would move to a position adjacent the then lower end of the body 110 and extracted material held predominantly on the previously upwardly presented surfaces of the filter elements 124, 124a would be discharged gravitationally from the elements.

Referring now to Figure 5, a modification to the apparatus shown in Figure 4 is illustrated. Parts similar to those of Figure 4 are indicated by the same reference numerals but with a prime sign. The modification is to permit both the mounting plates 118', 119' to move relative to the body 110' although one of the plates, that indicated at 119', is constrained only to move linearly along an axis A which lies in a plane in which the path of movement of the plate 119' also lies. This is achieved by mounting either edge 125' of the mounting plate 119' in guide means 127 comprising channels, the opening of the channels facing inwardly, the edges 125' of the mounting plate 119' being especially adapted for this purpose. The guide means 127 extend in the direction of axis A which is transverse to the direction of fluid flow through the filter member. Thus as the apparatus is inverted, the mounting plate 119' may slide linearly. Depending on whether the apparatus is inverted by rotation anti-clockwise or clockwise, the plate 119' will slide either to the left or to the right as seen in Figure 4 (assuming that the plate 119' is not in an end left or right position in which further movement to the left or right would be prevented) and any extracted material entrapped in the guides 127 will be removed by the sliding edges 125'.

When the apparatus is returned to a filtering position, the way that the elements 124' will overlap will again depend on whether the apparatus is rotated clockwise or anti-clockwise. If the apparatus is inverted anti-clockwise, the elements 124' will overlap to the right and vice versa. Thus if the direction of inversion is alternated, alternative sides of the filter 124' will be presented to the fluid to be flushed, and this greatly assists clearing of the elements, the fluid subsequently filtered, acting as a flushing fluid to remove any remaining extracted material from those faces of the elements facing in the direction of fluid flow, which faces previously faced against the direction of the fluid flow.

Of course, cleaning of the elements by changing the sense in which the elements 124' overlap may be not be carried out upon each inversion of the body but less often as required.

To change the sense in which the elements 124' overlap, it is desirable for such inversion of the body 110 to comprise a simple $180^{\circ}$ rotation in a clockwise or anti-clockwise direction and then to right the body by a further $180^{\circ}$ rotation clockwise or anti-clockwise respectively.

However, although this would result in the filter elements 124a' assuming alternate left or right overlapping positions, the plate 119 would not alternately assume a correct position at opposite ends of the guide channels 127. Thus the filter would not operate correctly.

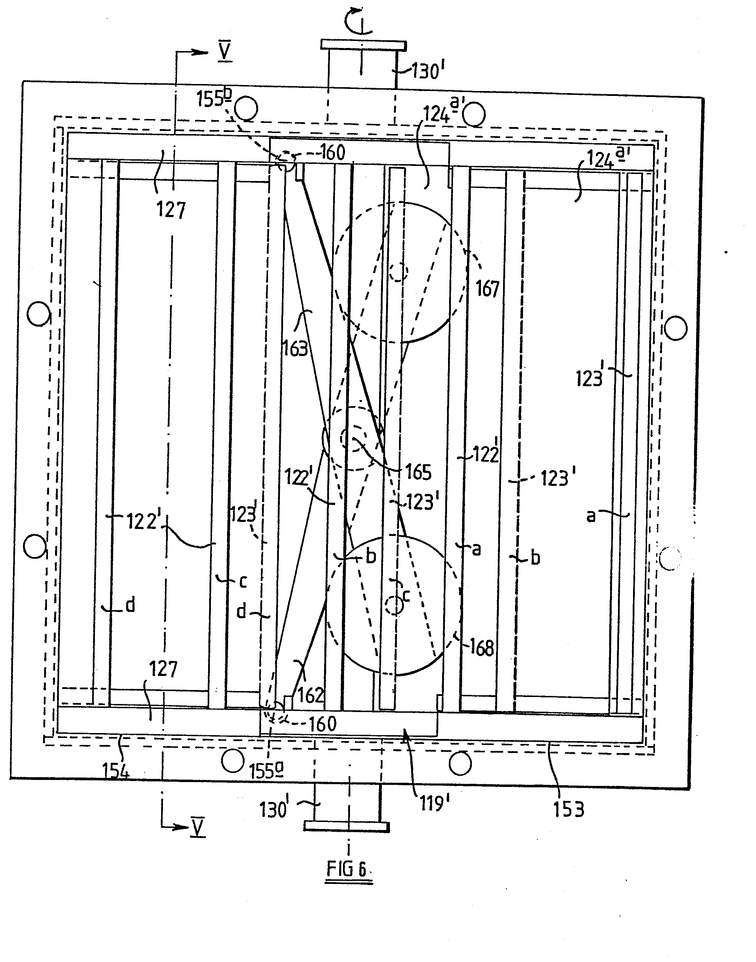

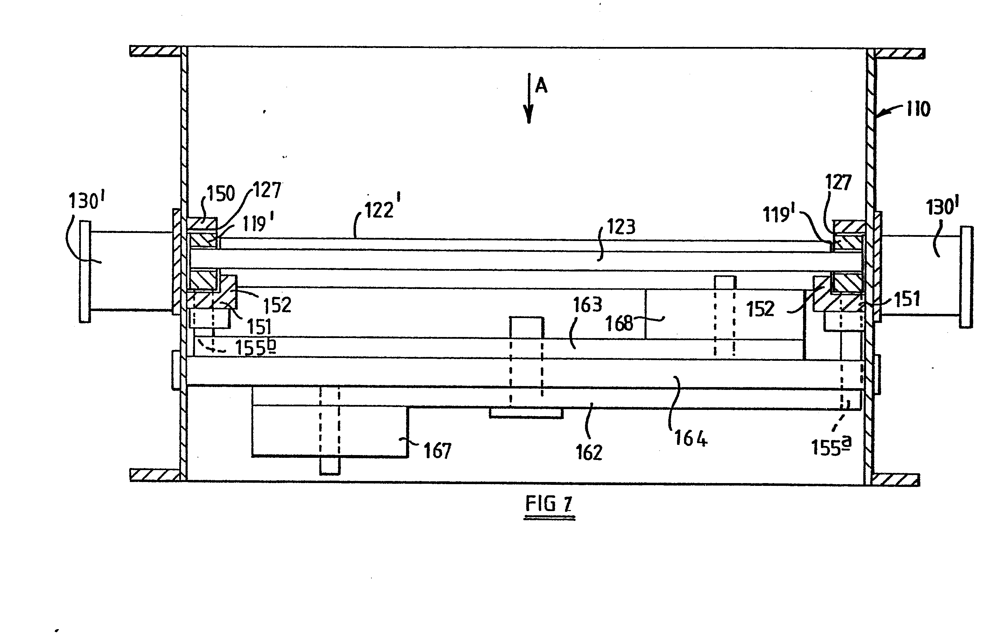

Figures 6 and 7 illustrate a further modification including a counterweight device which ensures that both the filter elements 124a' and plate 119' assume correct positions during a cycle of rotation as described.

Referring to Figures 6 and 7, parts similar to corresponding parts in Figures 4 and 5 are indicated by the same reference numerals. The guide channels 127 in this embodiment each have an upper flange 150 and a lower flange 151 connected to the body 110 of the filtering apparatus, the lower flange 151 having an inturned lip 152 extending over end parts 153 and 154 of the channels 127 only.

Guide/pivot pins 155a and 155b are located in recesses 160 in plate 119', and pin 155a connects one end of a lever 162 of the counterbalance device, to one side of the plate 119', whilst pin 155b connects a second lever 163 of the counterbalance device to the opposite side of plate 119'.

The two levers 162 and 163 are mutually connected at a pivot 165, the pivot being fixed relative to a cross piece 164 which is itself fixed relative to the body 110 of the apparatus.

At one end of lever 162 remote from the pin 155a, a counterweight 167 is provided which depends when the unit is in an ordinary filtering position, as shown in Figure 7, and at the end of lever 163, remote from pin 155b a further counterweight 168 is provided which extends upwardly, as seen in Figure 7, when the unit is in an ordinary filtering position.

The retaining elements 123' extend between the sides of the plates 119'. In Figures 6 and 7, the filter elements 124a' are shown in overlapping relationship and thus the retaining elements 122' lie between the elements 123' with the filtering elements 124a' extending therebetween.

Pairs of elements 122', 123' to which the filter elements 124a are connected, are designated a-a, b-b, c-c and d-d.

The normal direction of fluid to be filtered is in a direction of arrow A, shown in Figure 7, and thus the fluid is constrained to flow through the flow paths presented by the filter elements 124a'.

When the flow paths become blocked and it is necessary to clear the filter elements, the fluid flow is stopped whilst the body 110 is inverted by rotation through 180° about trunnions 130'.

It will be appreciated that because the counterweights 167, 168 are mounted in a scissor type arrangement with the levers 162, 163 with the pivot 165 fixed, sliding movement of the plate 119' in the channels 127 is in an opposite direction to the corresponding movement of the weights 167, 168 transmitted through the levers 162, 163. By making the counterweights sufficiently heavy to move the plate 119' against gravity, movement of the counterweights 167, 168 will be dominant. Commencing with the plate 119' in the far left extreme position, shown in Figure 6, with the filter elements 124a' overlapping so that each element overlaps the next right element, a 90° clockwise rotation of plate 119' about trunnions 130', as indicated by the arrow, will retain counterweights 167 and 168 in a bottom position under gravity, and the plate 119' in the channels 127 in an upward extreme position. A further clockwise rotation of 90° will again bring the weights 167 and 168 to a horizontal position but above the plate 119', in the position seen in Figure 7. When in this position, the filter elements 124a' will each depend downwardly vertically and thus any extracted material present on the previously upward presented surfaces of the filter elements will be deposited downwards and thus removed from the filter element.

By rotating the body 110 90° about trunnions 130' clockwise, the counterweights 167, 168 will ensure that the plate 119' is moved into an extreme position opposite to the starting position, whilst a still further 90° clockwise rotation will bring the body back to its original position and result in the plate 119' being maintained in its assumed extreme position opposite to the starting position. The filter elements 124a' will also thus now overlap in an opposite sense so that each element 124a' overlaps the next right element.

Converse movement of the body, i.e. first anti-clockwise 180° to clear the filter elements 124a' and then anti-clockwise 180° to return the body to a filtering position, will bring the plate 119' and elements 124a' again to their original starting positions.

If it is desired to invert the body but not change the sense in which the filter elements overlap, the body may be inverted first clockwise or anti-clockwise 180° to clear the elements 124a' and then anti-clockwise or clockwise 180° respectively to return the elements 124a' to their original starting positions.

Of course, any other counterweight arrangement or indeed any other arrangement for ensuring that, when required, the filter elements can be arranged to overlap first in one sense and then in an opposite sense may be used where this facility is required.

In each of the embodiments described above, inversion of the body 10 or 110 may be achieved using power means such as an electric, pneumatic or hydraulic power means, acting through a gear rack or other transmission, which power means may be used to return the body to the normal filtering position after inversion.

In each case, the filter member, when in the normal filtering position, extracts coarse particulate material from the fluid to be filtered whilst permitting the carrier fluid and particles entrained in the fluid finer than the size of the passageways presented by the mesh material of the filter member to pass through the filter member. The finer particles are removed by the filter bag (or subsequent filter member) and the fluid passes from the apparatus, for example, for re-use, storage or disposal. When the filter member and/or filter bag (or subsequent filter member) become full, blocked or clogged, and the body is inverted, not only the material retained by the filter member is removed, but also the material retained in the filter bag (or subsequent filter member) is permitted to pass back through the primary filter member, and hence is removed. During this inversion process, the inlet of the body 12 or 112 will become an outlet for the filtered material, and container, conveyor or other removal means may be located below the outlet 12, 112 to collect and remove the filtered material.

Although arrangements have been described wherein a fluid is used for flushing when the body is inverted, it is preferred in many applications, for example in removal of swarf from a cooling liquid, that the filtered particulate material remains dry. Hence if flushing fluid is used, in these circumstances the fluid is preferably air or another gas.

In known systems, for example systems incorporating a filtering apparatus to filter swarf from cooling liquid, a by-pass circuit for the fluid to be filtered is normally necessary so that if the filter apparatus becomes blocked, a substantial restriction to the flow of fluid does not occur. This restriction could result in a problem upstream or downstream of the filtering apparatus. This by-pass circuit however can also present further difficulties because fluid is permitted to pass unfiltered and thus this cooling liquid becomes increasingly contaminated.

In order to permit of continuous filtering, with no interruption as the body of the filtering apparatus is inverted, preferably a pair of filtering apparatus as hereinbefore described are provided, which are arranged to work in tandom whereby as one filtering apparatus is filtering normally, the other may be inverted to remove the filtered particulate material retained thereby. A valve or other means, may be provided to switch the flow of fluid to be filtered from one filtering apparatus to the other, which valve may be automatically controlled to be actuated after a preset time, or actuated when a sensor in the fluid flow senses that a restriction has occurred. Thus no by-pass circuit is necessary and problems associated with such by-pass circuits are thus overcome.

The power means for inverting the body may be controlled to be actuated automatically as the valve or other means which switches the fluid flow from one filtering apparatus to the other, is actuated, or may be actuated manually as required.

Alternatively the power means can be controlled so that the bodies of the two apparatus are always orientated oppositely, the fluid to be filtered being diverted to the upright body.

Many modifications are of course possible to the filtering apparatus described. For example, in the embodiment described with reference to Figure 3, if desired the strips 24 themselves may be made of a material, or coated with a material, having non-stick properties such as those used for coating holloware, e.g. Teflon (Registered Trade Mark). Similarly, the mesh material of the filter elements 124, 124a' of the Figures 4 and 5 and Figures 6 and 7 embodiments may be made of a material or coated with a material having non-stick properties. Where the fluid to be filtered is an oil based fluid, the filaments or mesh material need also to be oil resistant, or where the fluid to be filtered is a caustic chemical such as a strong acid or alkali, resistant to that chemical. Instead of a filtering bag 15, 115 (or subsequent filtering members), an alternative secondary filtering element to remove the finer particles from the fluid to be filtered, may be provided. Furthermore, the mesh material of the Figures 4 and 5 or Figures 6 and 7 embodiments may be made of any desired type of material such as for example an aluminium screen having apertures therein of a size to remove at least the coarser particles from the fluid.

Although in each case described hereinbefore, the orientation and geometry of the filtering member has been described as being changed by inverting the filter member or members of the apparatus and relying on gravity, the filter member or members need not be completely inverted, particularly where a flushing fluid is used. Partial inversion may be a sufficient change in orientation, but again under gravity.

0139200

CLAIMS:

1. A method of filtering utilising a filtering apparatus (200;10;110) having at least one filter member (211a,211b,211c; 18,19;118,119) presenting a plurality of flow paths therethrough of a form to retain, in use, at least a portion of material to be extracted from a stream of fluid to be filtered, characterised in that said method comprises the steps of passing a stream of fluid to be filtered in a forward direction through the filter member (211a,211b,211c; 18,19;118,119) with the filter member in a filtering position, stopping the flow of fluid relative to the filter member, changing the orientation of the filter member under gravity, to remove extracted material from the filter member.

2. A method according to Claim 1 characterised in that the filter member is rotated under gravity about an axis transverse to the forward direction to change the orientation thereof.

3. A method according to Claim 1 or Claim 2 characterised in that the filter member is moved out of the path of the fluid flow to a position where the orientation thereof is changed.

4. A method according to Claim 3 characterised in that said apparatus comprises a plurality of filter members (211a,211b,211c) provided as a continous belt conveyor, each filter member presenting flow paths, the method including the step of moving each of said filter members (211a,211b,211c) from a first position in which the stream of fluid is constained to pass in the forward direction through the flow paths defined thereby out of the fluid stream.

5. A method according to any one of Claims 1 to 4 characterised in that said change in orientation of the or each filter member under gravity is achieved by moving the filter member from a position in which a face of the filter member upon which the stream of fluid impinges when the member is in the fluid stream are presented generally horizontally upwardly, into a position inclined relative to the horizontal wherein at least some of the extracted material is discharged therefrom.

6.    A method according to any one of Claims 1 to 5 characterised in that the extracted material is subjected to action for assisting removal of the extracted material from the filter member or members when the flow of fluid has been relatively stopped, said action comprising subjecting the or each filter member to a reverse flow of fluid.

7.    A method according to Claim 6 wherein the fluid to which the filter member is subjected in the reverse direction is a flushing fluid different from the fluid to be filtered.

8.    A method according to Claim 1 or Claim 2 characterised in that the fluid flow in the forward direction is stopped with the filter member in its filtering position before the operation of the filter member is changed under gravity.

9.    Filtering apparatus comprising at least one filter member (211a,211b,211c; 18,19;118,119) presenting a plurality of flow paths therethrough, means (212,213;31;131) to change the orientation of the filter member under gravity from a filtering position in which the filter member is in a stream of fluid to be filtered, and presents constriction to said fluid in a forward direction so that material is extracted from the fluid by the filter member, to another position wherein extracted material is removed from the filter member.

10.    Filtering apparatus according to Claim 9 wherein a plurality of filter members (211a,211b,211c) are provided, each comprising a section of a continuous belt conveyor (211) and each presenting said flow paths to the fluid flow, the belt (211) being movable to move each filter member in turn from its filtering position in which the fluid is constrained to pass in the forward direction through the flow paths, to said another position at which the orientation of the filter member is changed.

FIG.1.

211a 211b 211c 216 228 227 240 226 225 214 215 231 232 241 212 213 230 218 219 217 211 200

0139200

FIG. 2

0139200

FIG 3

4/7

FIG 4

FIG 5

FIG 6

FIG 7